(19) Europäisches Patentamt
European Patent Office
Office européen des brevets

(11) Veröffentlichungsnummer: **0 119 419**
**B1**

# (12) EUROPÄISCHE PATENTSCHRIFT

(45) Veröffentlichungstag der Patentschrift: **12.08.87**

(51) Int. Cl.⁴: **C 07 F 7/22**, A 01 N 55/04

(21) Anmeldenummer: **84101050.7**

(22) Anmeldetag: **02.02.84**

(54) **Triorganozinnacetylsalicylate und diese enthaltende biozide Mittel.**

(30) Priorität: **22.02.83 DE 3306036**

(43) Veröffentlichungstag der Anmeldung: **26.09.84 Patentblatt 84/39**

(45) Bekanntmachung des Hinweises auf die Patenterteilung: **12.08.87 Patentblatt 87/33**

(84) Benannte Vertragsstaaten: **AT BE CH DE FR GB IT LI LU NL SE**

(56) Entgegenhaltungen:
**FR-A-1 386 350**

**CHEMICAL ABSTRACTS, Band 60, Nr. 10, 11. Mai 1964, Spalte 11503f, Columbus, Ohio, USA - R.A. CUMMINS et al.: "The infrared spectra of *organotin in compounds*"**

**Die Akte enthält technische Angaben, die nach dem Eingang der Anmeldung eingereicht wurden und die nicht in dieser Patentschrift enthalten sind.**

(73) Patentinhaber: **SCHERING AKTIENGESELLSCHAFT Berlin und Bergkamen, Waldstrasse 14 Postfach 15 40, D-4709 Bergkamen (DE)**

(72) Erfinder: **Landsiedel, Horst, Auf dem Spitt 34, D-5758 Fröndenberg (DE)**
Erfinder: **Plum, Hans, Dr. Dipl.- Chem., Sulkshege 12, D-4700 Hamm. (DE)**

**EP 0 119 419 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft neue Triorganozinnverbindungen der allgemeinen Formel

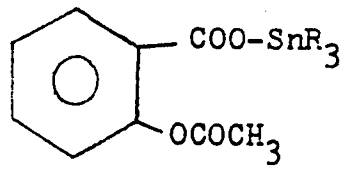

worin R einen Alkylrest mit 3 - 8 C-Atomen, einen Cyclohexylrest oder einen Phenylrest darstellt, ausgenommen R = n-Butyl.

Die Erfindung betrifft ferner biozide Mittel, die neben flüssigen oder festen Trägerstoffen als aktiven Wirkstoff Triorganozinnverbindungen der allgemeinen Formel

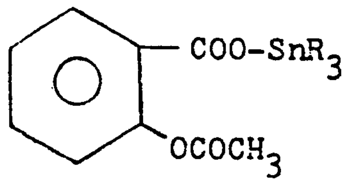

worin R einen Alkylrest mit 3 - 8 C-Atomen, insbesondere 4 C-Atomen, einen Cyclohexylrest oder einen Phenylrest darstellt, enthalten.

Bevorzugter Wirkstoff ist ein biozides Mittel, daß als aktive Komponente Tri-n-Butylzinnacetylsalicylat enthält.

Die Erfindung betrifft ferner die Verwendung dieser Mittel zur Bekämpfung von Bakterien, Pilzen, Algen und Unterwasserbewuchs-Organismen bzw. im Holzschutz zur Bekämpfung von holzschädigenden Pilzen.

Es ist bekannt, daß Triorganozinnverbindungen eine gute biozide Wirkung aufweisen. Diese Erstreckt sich auf Bakterien, Pilze, Algen und bestimmte Meeresorganismen wie Balaniden und Röhrenwürmer.

Die biozide Wirkung der Triorganozinnverbindungen vom Typ $R_3SnX$, worin R einen Alkyl-, Cyclohexyl- oder Phenylrest und X einen anionischen Rest darstellt, wird in erster Linie von der Kettenlänge der am Zinn gebundenen Kohlenwasserstoffreste bestimmt. Das Wirkungsoptimum wird dann erreicht, wenn in den Alkylzinnverbindungen die Gesamtzahl der am Zinn gebundenen C-Atome 9 - 12 beträgt, d. h. bei Tripropyl- und Tributylzinnverbindungen (s. Bokranz, Plum, Fortschritte der chemischen Forschung, Bd. 16, Heft 3/4, S. 377). Eine ähnlich gute biozide Wirkung weisen die Triphenylzinnverbindungen auf.

Der anionische Rest X hat im allgemeinen keinen Einfluß auf die biozide Wirkung der Triorganozinnverbindungen (International Tin Research Institute, Veröffentlichung Nr. 599, 1979; Bokranz, Plum, Fortschritte der chemischen Forschung, Bd. 16, Heft 3/4, S.377). Maßgebend für die Wirksamkeit ist der Trialkylzinngehalt.

So müssen von Tributylestern langkettiger Säuren, z. B. Tributylzinnaphthenat oder Tributylzinnlinoleat, die etwa nur den halben Sn-Gehalt des Tributylzinnoxids aufweisen, zur Erreichung, der gleichen bioziden Wirkung ca. die doppelten Mengen wie von TBTO aufgewendet werden.

Der anionische Rest X beeinflußt die physikalischen Daten der Triorganozinnverbindungen. So sind z. B. Tributylzinnoxid und Tributylzinnchlorid niedrigviskose Flüssigkeiten, Tributylzinnabietat und Tributylzinnphosphat mittel- bis hochviskose Flüssigkeiten und Tributylzinnfluorid ein fester Stoff. Die für den Materialschutz am meisten verwendete Triorganozinnverbindung ist das Tri-n-butylzinnoxid. Wird der Sauerstoff in dieser Verbindung durch andere anionische Gruppen (z. B. Säurereste von organischen oder anorganischen Säuren) ersetzt werden in der Regel Produkte mit niedrigerer Wasserlöslichkeit und geringerer Flüchtigkeit erhalten.

Es wurde nun überraschend gefunden, daß Triorganozinnacetylsalicylate der allgemeinen Formel

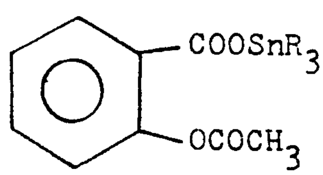

in der R einen Alkylrest mit 3 - 8, insbesondere 4 C-Atomen, einen Cyclohexyl- oder Phenylrest darstellt, im Vergleich zu anderen Triorganozinnverbindungen, auf den Triorganozinn-Gehalt bezogen, eine wesentlich größere biozide Wirkung aufweisen, beispielsweise gegenüber dem Tri-n-butylzinnsalicylat, das nach FR-A-1 386 350 als mikrobizides mittel bekannt ist.

Diese Verbindungen sind neu und - mit Ausnahme des Trin-butylzinnacetylsalicylats (s. R. A. Cummins u. a. "The infrared spectra of organotin compounds", Australia Commonwealth Dept. Supply Defense Std. Lab. Rept. 266, 106 pp. (1963) - nicht in der Literatur beschrieben.

Anhand eines Auflegetestes wurde die biozide Wirkung, der Triorganozinnacetylsalicylate geprüft. Dazu wurden Papierrundfilter (Ø 5,5 cm) in abgestuften Konzentrationen des Wirkstoffes in Äthanol getränkt, an der Luft getrocknet und danach in Petrischalen auf Nähr-Agar, der mit Bakteriensuspension bzw. Sporensuspension von Prüfpilzen beimpft war, gelegt und 2 Tage bei +37 °C (Bakterien) bzw. 3 Wochen bei +30 °C (Pilze) bebrütet. Danach wurden die Hemmzonen um die Proben in mm bestimmt. Als Vergleichsprodukte dienten Tri-n-butylzinnoxid (TBTO) und Tri-n-butylzinnbenzoat (TBTB) sowie Triorganozinnchloride (siehe Tabelle 1).

Tri-n-butylzinnacetylsalicylat (TBTAS) mit einen Tributylzinngehalt von ca. 61 % zeigt eine ebenso gute biozide Wirkung wie das Tri-n-butylzinnoxid (TBTO) mit einem Tributylzinngehalt von ca. 95 %.

Im Vergleich zu Tri-n-butylzinnbenzoat (TBTB) ist die biozide Wirkung von TBTAS trotz des geringeren Tributylzinngehaltes deutlich größer.

Auch bei Tricyclohexylzinn-, Triphenylzinn-, Tripropylzinn- und Trioctylzinnacetylsalicylat ist die Wirkung z.T. besser als bei den entsprechenden Chloriden, obwohl der Triorganozinngehalt geringer ist.

Die sehr gute fungizide Wirkung der erfindungsgemäß als biozider Wirkstoff eingesetzten Tri-n-butylzinnverbindung zeigt auch ein Vergleich der Grenzwerte mit denen von Tri-n-butylzinnoxid. Die Werte wurden bestimmt an Kiefernholz (Pinus sylvestris L) gegen den Prüfpilz Coniophora cerebella (BAM Ebw 15):

| | Grenzwerte in kg/m$^3$ Holz |
|---|---|
| Tri-n-butylzinnoxid | 0,45 - 0,65 |
| Tri-n-butylzinnacetylsalicylat | 0,20 - 0,32 |

Die erfindungsgemäßen Verbindungen lassen sich herstellen durch Umsetzung von Acetylsalicylsäure mit Triorganozinnoxiden bzw. -hydroxiden oder Triorganozinnchloriden in Gegenwart von Alkalilaugen.

Die erfindungsgemäßen Mittel auf der Basis der Triorganozinnacetylsalicylate eignen sich vorzüglich für den Materialschutz, insbesondere für den Holzschutz, zur Verhinderung des Abbaues oder Befalls durch Mikroorganismen. Sie lassen sich in bekannter Weise in Form von Lösungen, Emulsionen, Dispersionen mit und ohne Bindemittel und gegebenenfalls mit Zusatz von Netz-, Haft-, Emulgier-und Dispergierhilfsmitteln anwenden für den Schutz von z. B. Textilien, Baustoffen und Kunststoffen.

Für den Holzschutz können die Verbindungen in Form von Lösungen oder Emulsionen gegebenenfalls unter Zusatz von Bindemitteln sowie Farb- und Hilfsstoffen durch Streichen, Spritzen, Sprühen oder Tauchen angewendet werden.

Die erfindungsgemäßen Mittel können zur Erweiterung des bioziden Spektrums mit anderen bioziden Wirkstoffen wie z. B. chlorierten Phenolen, Salzen des N'-Hydroxy-N-cyclohexyl-diazeniumoxids, N-Cyclohexyl-N-methoxy-2,5-di-methylfuran-3-carbonsäureamid, Dichlofluamid, Fluorfolpet, kombiniert werden.

Für den Holzschutz können gegebenenfalls Kombinationen mit insektiziden Wirkstoffen, z. B. Carbamate, Phosphorsäureester, chlorierte Kohlenwasserstoffe, Pyrethroide eingesetzt werden.

Die erfindungsgemäßen Verbindungen werden in Konzentrationen von 0,1 - 5 Gew.-%, vorzugsweise 0,3 - 3 Gew.-%, angewendet.

Mit den erfindungsgemäßen Verbindungen lassen sich durch Formulierung mit geeigneten Emulgatoren (z. B. Alkylarylpolyglykoläther, Carbonsäurepolyglykolester) Zubereitungen herstellen, die mit Wasser verdünnt klare bzw. opaleszierende, stabile Mischungen ergeben. Diese Zubereitungen sind z. B. geeignet für den Schutz von frisch geschlagenem Holz, zur bioziden Ausrüstung von wäßrigen Anstrichsystemen, Papieren, Pappen, Textilien und Baustoffen sowie zur Ausrüstung von Wasserflotten gegen unerwünschte Mikroorganismen in Kreislaufkühlwässern, Bohr- und Schneidölen, Fabrikationswasser bei der Papierproduktion. Die wasserverdünnbaren Zubereitungen enthalten die erfindungsgemäßen Verbindungen in Konzentrationen von 5 - 35 Gew.-%. Je nach Anwendungsbereich werden sie mit Wasser auf 0,001 - 3 Gew.-% verdünnt.

Tabelle 1 Auflegetest - Hemmzonen um die Proben in mm

(+ = leichter Bewuchs der Probe
++ = mittlerer Bewuchs der Probe
+++ = starker Bewuchs der Probe)

| Wirkstoff | % Gehalt der Tränklösung | Bakterien | | | Pilze | | | | | |
|---|---|---|---|---|---|---|---|---|---|---|
| | | Bac. mes. | Bac. subt. | Prot. vulg. | Pull. pull. | Asp. vers. | Clad. herb. | Con. put. | Chaet. glob. | Trich. vir. |
| TBTO | 2 | 10-12 | 12-15 | 5-6 | 3-5 | 12-15 | 6-8 | >15 | 12-15 | 4-5 |
| (Tributylzinngehalt ca. 95 %) | 1 | 8-10 | 12-15 | 4-5 | 2-3 | 10-12 | 6-8 | 10-12 | 10-12 | 3-4 |
| | 0,5 | 6-8 | 10-12 | 3-4 | 0-1 | 8-10 | 2-3 | 6-8 | 6-8 | 2-3 |
| | 0,25 | 6-8 | 10-12 | 2-3 | 0+ | 8-10 | 0 | 3-4 | 3-4 | 0 |
| TBTB | 2 | 8-10 | 8-10 | 2-3 | 2-3 | 8-10 | 3-4 | 8-10 | 8-10 | 1-2 |
| (Tributylzinngehalt ca. 70 %) | 1 | 6-8 | 8-10 | 1-2 | 0-1 | 6-8 | 2-3 | 6-8 | 7-9 | 0-1 |
| | 0,5 | 3-4 | 6-8 | 1-2 | 0-1 | 5-7 | 1-2 | 3-4 | 3-4 | 0 |
| | 0,25 | 2-3 | 4-6 | 0 | 0++ | 3-4 | 0+ | 0-1 | 1-2 | 0++ |
| TBTAS | 2 | 12-15 | 12-15 | 5-7 | 2-3 | 10-12 | 6-8 | 12-15 | 12-15 | 4-5 |
| (Tributylzinngehalt ca. 61 %) | 1 | 10-12 | 12-15 | 5-7 | 1-2 | 10-12 | 5-7 | 12-15 | 12-15 | 4-5 |
| | 0,5 | 10-12 | 10-12 | 4-6 | 0-1 | 10-12 | 3-4 | 6-8 | 8-10 | 2-3 |
| | 0,25 | 6-8 | 10-12 | 2-3 | 0+ | 8-10 | 0 | 3-4 | 5-7 | 0 |

Tabelle 1 (Fortsetzung)

| Wirkstoff | % Gehalt der Tränklösung | Bakterien | | | Pilze | | | | | |
|---|---|---|---|---|---|---|---|---|---|---|
| | | Bac. mes. | Bac. subt. | Prot. vulg. | Pull. pull. | Asp. vers. | Clad. herb. | Con. put. | Chaet. glob. | Trich. vir. |
| Tricyclohexylzinnchlorid (Triorganozinngehalt: 91 %) | 2 | 6-8 | 6-8 | 1-2 | 2-3 | 6-8 | 1-2 | 8-10 | 4-5 | 1-2 |
| | 1 | 4-6 | 4-5 | 0-1 | 1-2 | 4-6 | 0-1 | 4-6 | 3-4 | 0-1 |
| Tricyclohexylzinnacetylsalicylat (Triorganozinngehalt: 67 %) | 2 | 5-7 | 8-10 | 2-3 | 3-4 | 8-10 | 3-4 | 12-15 | 8-10 | 3-4 |
| | 1 | 5-7 | 4-6 | 1-2 | 2-3 | 8-10 | 1-2 | 10-12 | 6-8 | 2-3 |
| Triphenylzinnchlorid (Triorganozinngehalt: 91 %) | 2 | 6-8 | 6-8 | 1-2 | 1-2 | 6-8 | 1-2 | 6-8 | 5-6 | 1-2 |
| | 1 | 3-4 | 6-8 | 0-1 | 1-2 | 3-4 | 0-1 | 6-8 | 4-5 | 1-2 |
| Triphenylzinnacetylsalicylat (Triorganozinngehalt: 66 %) | 2 | 6-8 | 8-10 | 2-3 | 3-4 | 8-10 | 3-4 | 12-15 | 10-12 | 3-4 |
| | 1 | 4-6 | 6-8 | 2-3 | 1-2 | 4-5 | 3-4 | 12-15 | 8-10 | 2-3 |

Tabelle 1 (Fortsetzung)

| Wirkstoff | % Gehalt der Tränklösung | Bakterien Bac. mes. | Bac. subt. | Prot. vulg. | Pilze Pull. pull. | Asp. vers. | Clad. herb. | Con. put. | Chaet. glob. | Trich. vir. |
|---|---|---|---|---|---|---|---|---|---|---|
| Tripropylzinnchlorid (Triorganozinngehalt: 87 %) | 1 | 10-12 | 12-15 | 4-6 | 2-3 | 12-15 | 4-6 | 12-15 | 10-12 | 3-4 |
| | 0,5 | 6-8 | 10-12 | 4-6 | 2-3 | 8-10 | 4-6 | 8-10 | 10-12 | 2-3 |
| Tripropylzinnacetylsalicylat (Triorganozinngehalt: 58 %) | 1 | 12-15 | 12-15 | 6-8 | 4-6 | 12-15 | 8-10 | > 15 | > 15 | 4-5 |
| | 0,5 | 10-12 | 12-15 | 4-6 | 4-5 | 12-15 | 6-8 | > 15 | 12-15 | 4-5 |
| Trioctylzinnchlorid (Triorganozinngehalt: 93 %) | 4 | 3-4 | 4-5 | 1-2 | 0-1 | 4-5 | 0-1 | 3-4 | 4-6 | 0-1 |
| | 2 | 2-3 | 2-3 | 0 | 0-1 | 3-4 | 0-1 | 3-4 | 4-6 | 0-1 |
| Trioctylzinnacetylsalicylat (Triorganozinngehalt: 72 %) | 4 | 3-4 | 4-6 | 1-2 | 1-2 | 6-8 | 3-4 | 4-5 | 4-5 | 1-2 |
| | 2 | 3-4 | 4-6 | 1-2 | 1-2 | 4-6 | 2-3 | 3-4 | 3-4 | 0-1 |
| 0-Probe | - | 0 | 0 | 0 | 0+++ | 0+++ | 0+++ | 0+++ | 0+++ | 0+++ |

**Beispiel 1**

Herstellung von Tri-n-butylzinnacetylsalicylat.

1 Mol Acetylsalicylsäure (180,16 g) wird mit 0,5 Mol Tri-n-butylzinnoxid (298,04 g) unter Rühren auf ca. 110 °C erhitzt, eine Stunde bei dieser Temperatur gehalten und danach das entstandene Reaktionswasser durch Anlegen eines leichten Vacuums von ca. 0,1 bar entfernt. Das entstandene Produkt stellt eine leicht gelb gefärbte Flüssigkeit dar mit folgenden Daten:

Sn-Gehalt: 25,4 Gew.-% (Theorie: 25,3 %)

Viskosität: 145 Pa.s bei 20 °C

Dichte: 1,235 bei +23 °C.

Das Produkt ist löslich in Äthanol, Xylol, Hexan Testbenzin, Butyldiglykol, Aceton und chlorierten Kohlenwasserstoffen.

**Beispiel 2**

Herstellung von Triphenylzinnacetylsalicylat.

1 Mol Acetylsalicylsäure (180,16 g) wird mit 0,5 Mol Triphenylzinnoxid (358 g) und 1000 ml Xylol unter Rühren am Rückfluß gekocht. Innerhalb von ca. 1 Stunde wird das entstehende Reaktionswasser (1/2 Mol) über eine Xylolbrücke azeotrop abdestilliert. Danach wird das Xylol am Rotationsverdampfer abgetrennt. Man erhält ein festes, harzartiges Produkt mit folgenden Daten:

Sn-Gehalt: 22,0 Gew.-% (Theorie: 22,4 %)

Schmelzpunkt: 43 °C.

Das Produkt ist löslich in Aceton, Xylol, Methylenchlorid.

**Beispiel 3**

Herstellung von Tricyclohexylzinnacetylsalicylat.

1 Mol Acetylsalicylsäure (180,16 g) wird mit 1 Mol Tricyclohexylzinnhydroxid (385,16 g) und 1000 ml Xylol unter Rühren am Rückfluß gekocht. Innerhalb von 1 Stunde wird das entstehende Reaktionswasser (1 Mol) über eine Xylolbrücke azeotrop abdestilliert. Danach wird das Xylol am Rotationsverdampfer abgetrennt. Man erhält ein halbfestes, zähes Produkt mit einem Sn-Gehalt von 21,1 Gew.-% (Theorie: 21,7 %).

Das Produkt ist löslich in Äthanol, Methylenchlorid, Xylol, Testbenzin.

**Beispiel 4**

Herstellung von Trioctylzinnacetylsalicylat.

1 Mol Acetylsalicylsäure (180,16 g) wird zusammen mit 1 Mol Trioctylzinnchlorid (493,82 g) unter Rühren auf ca. +50 °C erhitzt, dann wird portionsweise 1 Mol NaOH (40 g) in fester Form zugegeben und dabei die Temperatur auf +100 °C erhöht. Nach der Zugabe wird die Temperatur noch 1 1/2 Stunden gehalten und danach das ausgefallene NaCl über eine Nutsche abgesaugt. Das Filtrat wird Scheidetrichter vier Mal mit je 500 ml Wasser gewaschen und danach über wasserfreiem Natriumsulfat getrocknet. Man erhält ein flüssiges Produkt mit folgenden Daten:

Sn-Gehalt: 19,2 Gew.-% (Theorie: 18,6 %)

Viskosität: 580 mPa.s bei +20 °C.

Das Produkt ist löslich in Äthanol, Xylol, Testbenzin, Butyldiglykol, Hexan und chlorierten Kohlenwasserstoffen.

**Beispiel 5**

Herstellung von Tri-n-propylzinnacetylsalicylat. 2 Mol Acetylsalicylsäure (360,32 g) werden mit 1 Mol Tri-n-propylzinnoxid (511,92 g) unter Rühren auf ca. 110 °C erhitzt, 1 Stunde bei dieser Temperatur gehalten und danach das entstandene Reaktionswasser durch Anlegen eines leichten Vakuums von ca. 0,1 bar entfernt. Das entstandene Produkt stellt eine leicht gelb gefärbte Flüssigkeit dar mit einem Sn-Gehalt von 28,3 Gew.-% (Theorie: 27,8 %).

Das Produkt ist löslich in Äthanol, Xylol, Testbenzin und chlorierten Kohlenwasserstoffen.

**Anwendungsbeispiel 1**

Auf Kiefernsplintholzklötzchen mit den Abmessungen 5 x 2,5 x 1,5 cm, Stirnflächen versiegelt, wird durch Anstreichen mit einer 1,5 Gew.-%igen Lösung von Tri-n-butylzinnacetylsalicylat in Testbenzin eine Menge von 200 g/$m^2$ (≙ ca. 250 ml/$m^2$) aufgebracht. Nach dem Trocknen bei Raumtemperatur (2 - 3 Wochen) werden die Klötzchen sterilisiert und in Kalleschalen dem Angriff des holzzerstörenden Pilzes Coniophora puteana ausgesetzt (Methode DIN 56176). Nach 12 Wochen wird der durch den Pilzangriff hervorgerufene Gewichtsverlust im Vergleich zu unbehandelten Probehölzern bestimmt:

| | Massenverlust, % |
|---|---|
| Kontrollklötzchen, ohne Wirkstoff | Ø 33,9<br>(37,1 - 31,3) |
| Prüfklötzchen | Ø 1,9<br>(2,6 - 1,6) |

Somit bietet ein Anstrich mit 1,5 Gew.-%iger Lösung von Tri-n-butylzinnacetylsalicylat in Testbenzin bei einer Auftragsmenge von 200 g/$m^2$ einen guten Schutz gegen Coniophora puteana.

**Anwendungsbeispiel 2**

Baumwollgewebe (Flächengewicht 600 g/$m^2$) wurde mit unterschiedlichen Konzentrationen von Triphenylzinnacetylsalicylat in Äthanol getränkt. Nach dem Trocknen bei Raumtemperatur (1 Woche) wurden die Teststücke im Freien in Gartenerde vergraben. Nach 6 Wochen wurden die Proben herausgenommen, gewässert, getrocknet und visuell auf Zerstörung hin beurteilt.
Ergebnis:

| Probe Nr. | Tränklösung % Wirkstoff | Beurteilung |
|---|---|---|
| 1 | 0 | starke Verfärbung und teilweise Zerstörung |
| 2 | 0,1 | starke Verfärbung, einzelne Flächenstücke zerstört |
| 3 | 0,2 | deutliche Verfärbung, sehr geringe Zerstörungen |
| 4 | 0,4 | vereinzelte Punkte verfärbt, keine Zerstörung erkennbar |
| 5 | 0,7 | vereinzelte Punkte verfärbt, keine Zerstörung erkennbar |
| 6 | 1,0 | keine Verfärbung und keine Zerstörung |

Baumwollgewebe läßt sich durch Tränken in 0,5 Gew.-%iger Lösung von Triphenylzinnacetylsalicylat wirksam gegen Verrottung schützen.

**Anwendungsbeispiel 3**

Kiefernsplintholzklötzchen mit den Abmessungen 5 x 2,5 x 1,5 cm werden 24 Std bei +103 °C getrocknet, gewogen und je 5 Klötzchen in abgestuften Konzentrationen von Tricyclohexylzinnacetylsalicylat in Chloroform unter Vakuum (10 mbar) getränkt. Nach dem Trocknen bei Raumtemperatur wird der Grenzwert nach DIN 56176 gegen Poria monticula bestimmt, d. h., es werden die Konzentrationen ermittelt, bei denen einerseits noch ein Angriff erfolgt (Gewichtsverlust > 3 %) und andererseits kein Angriff stattfindet (Gewichtsverlust < 3 %).
Ergebnis:

| Versuchs-Reihe | % Gehalt der Tränklösung | kg Fungizid/ $m^3$ Holz | Gewichtsverlust, % |
|---|---|---|---|
| 1 | 0 | 0 | Ø 26,4 (27,1 - 25,6) |
| 2 | 0,0063 | 0,068 | Ø 27,2 (27,9 - 24,8) |
| 3 | 0,010 | 0,095 | Ø 11,7 (12,4 - 10,1) |
| 4 | 0,016 | 0,22 | Ø 4,0 (2,9 - 4,5) |
| 5 | 0,025 | 0,34 | Ø 2,3 (1,1 - 3,0) |
| 6 | 0,040 | 0,48 | Ø 2,2 (1,0 - 2,4) |
| 7 | 0,063 | 0,61 | Ø 2,3 (1,2 - 2,6) |

Die Grenzwerte gegen Poria monticula für Tricyclohexylzinnacetylsalicylat betragen 0,22 - 0,34 kg/$m^3$ Holz.

**Anwendungsbeispiel 4**

Nach der Methode aus Anwendungsbeispiel 1 werden die Gewichtsverluste der Prüfklötzchen mit Anstrichen aus 1,5 %iger und 2,5 %igen Lösungen von Trioctylzinnacetylsalicylat in Testbenzin unter Zusatz von 5 Gew-% eines langöligen Leinölalkydharzes gegen Lentinus lepideus bestimmt:

| | Massenverlust, % |
|---|---|
| Kontrollklötzchen, ohne Fungizid | Ø 31,2<br>(33,0 - 29,9) |
| Prüfklötzchen, Anstrich 1,5 % Wirkstoff | Ø 5,1<br>(6,3 - 4,7) |
| " " 2,5 % " | Ø 2,5<br>(2,0 - 2,8) |

Mit einer 2,5 % Gew.-%igen Lösung von Trioctylzinnacetylsalicylat in Testbenzin bei einer Auftragsmenge von 200 g/$m^2$ ist ein guter Schutz gegen Lentinus lepideus gewährleistet.

**Anwendungsbeispiel 5**

Formulierung einer Antifoulingfarbe:
Rezeptur: 13,5 Gew.-Teile Cl-Kautschuk (Pergut S 20)
8,5 Gew.-Teile Cl-Paraffin (Witachlor 544)
8 Gew.-Teile Tri-n-propylzinnacetylsalicylat
30 Gew.-Teile Titandioxid
40 Gew.-Teile Xylol.
Die Komponenten wurden durch kurzes Rühren homogenisiert und zweimal über einen 3-Walzenstuhl gegeben. Die so erhaltene Antifoulingfarbe wurde auf Kunststoffplatten aufgestrichen. Nach dem Trocknen begann die Auslagerung sowohl in der Nordsee als auch in der Ostsee. Der Beobachtungszeitraum erstreckt sich bisher auf ca. 12. Monate, und es ist auf den Testplatten kein Bewuchs zu verzeichnen.

**Anwendungsbeispiel 6**

Wasserverdünnbare Formulierung:
24 Gew.-Teile Tri-n-butylzinnacetylsalicylat
56 Gew.-Teile nichtionogener Emulgator (Mischung von Carbonsäurepolyglykolestern
20 Gew.-Teile Wasser.
Die Komponenten werden in der obengenannten Reihenfolge unter Rühren bei Raumtemperatur zusammengegeben. Man erhält nach ca. 5 min Rührzeit eine klare Mischung, die sich mit Wasser in jedem Verhältnis verdünnen läßt.
In eine pigmentierte Dispersionsfarbe auf Basis Acrylat/ Styrol-Copolymerisat mit einem Festkörpergehalt von 52 Gew.-% wurden unterschiedliche Konzentrationen der obengenannten Formulierung eingerührt. Mit den ausgerüsteten Farben wurden dünne Kunststoffplättchen (4 x 4 cm) angestrichen und nach dem Trocknen in Petrischalen auf Agar, der mit Sporensuspensionen verschiedener Testpilze besprüht war, gelegt. Nach einer Bebrütungszeit von 4 Wochen bei +30 °C wurden die Hemmzonen bzw. das Wachstum auf den Proben bestimmt:

| Zusatz an Formulierung Gew.-% | Hemmzonen um die Proben in mm | | | | |
|---|---|---|---|---|---|
| | Pullularia pullulans | Chadosporum herbarum | Scherophoma pithyophila | Aspergillus versicolor | Paecilomyces varioti |
| 0 | 0+++ | 0+++ | 0+++ | 0+++ | 0+++ |
| 0,5 | 0++ | 0+ | 0 | 0+ | 0 |
| 1,0 | 0+ | 1 - 2 | 2 - 3 | 2 - 3 | 3 - 4 |
| 2,0 | 1 - 2 | 4 - 5 | 4 - 5 | 6 - 8 | 8 - 10 |
| 3,0 | 5 - 6 | 8 - 10 | 12 - 15 | 10 - 12 | 12 - 15 |

\+ = leichter Bewuchs der Probe

++ = mittlerer Bewuchs der Probe

+++ = starker Bewuchs der Probe

Eine Dispersionsfarbe auf Basis Acrylat/Styrol-Copolymerisat kann durch Zugabe von 1,5 - 2 Gew.-% einer konzentrierten wasserverdünnbaren Formulierung von Tri-n-butylzinnactylsalicylat, mit einem Wirkstoffgehalt von 24 %, ausreichend gegen den Bewuchs durch Bläue- und Schimmelpilze geschützt werden.

**Anwendungsbeispiel 7**

Wasserverdünnbare Formulierung:
15 Gew.-Teile Tricyclohexylzinnacetylsalicylat (aus Anwendungsbeispiel 3)
25 Gew.-Teile nichtionogener Emulgator (Alkylarylpolyglykoläther)
60 Gew.-Teile Wasser
0,001 Gew.-Teile Antischaumemulsion auf Siliconbasis.
Die Komponenten werden in der obengenannten Reihenfolge unter Rühren bei Raumtemperatur zusammengegeben. Man erhält nach ca. 5 min Rührzeit eine klare Mischung, die sich mit Wasser in jedem Verhältnis verdünnen läßt.

Mit diesem Produkt wurde die Kühlwasserflotte in einem Produktionsbetrieb ausgerüstet. Das Kühlwasservolumen betrug 1.400 $m^3$. Die obengenannte Formulierung wurde jeweils einmal an 5 aufeinanderfolgenden Tagen dem Wasser in einer Konzentration von 20 ppm zugesetzt.

Das Wasser zeigte folgende Keimzahlen:

| | | Keime/ml |
|---|---|---|
| 1. Tag | vor Zugabe | 59.000 |
| | 1. Zugabe | |
| 1. Tag | 4 Std nach 1. Zugabe | 21.000 |
| | 12 Std nach 1. Zugabe | 37.000 |
| | 24 Std nach 1. Zugabe | 48.000 |
| | 2. Zugabe | |
| 2. Tag | 4 Std nach 2. Zugabe | 18.000 |
| | 12 Std nach 2. Zugabe | 33.000 |
| | 24 Std nach 2. Zugabe | 46.000 |
| | 3. Zugabe | |
| 3. Tag | 4 Std nach 3. Zugabe | 11.000 |
| | 12 Std nach 3. Zugabe | 12.000 |
| | 24 Std nach 3. Zugabe | 27.000 |
| | 4. Zugabe | |
| 4. Tag | 4 Std nach 4. Zugabe | 14.000 |
| | 12 Std nach 4. Zugabe | 27.000 |
| | 24 Std nach 4. Zugabe | 40.000 |
| | 5. Zugabe | |
| 5. Tag | 4 Std nach 5. Zugabe | 18.000 |
| | 12 Std nach 5. Zugabe | 13.000 |
| | 24 Std nach 5. Zugabe | 21.000 |
| | 48 Std nach 5. Zugabe | 32.000 |
| | 72 Std nach 5. Zugabe | 55.000 |

**Patentansprüche**

für die Vertragsstaaten BE CH DE FR GB IT LI LU NL SE

1. Triorganozinnverbindungen der allgemeinen Formel

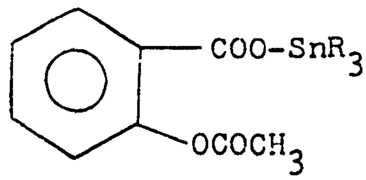

worin R einen Alkylrest mit 3 - 8 C-Atomen, einen Cyclohexylrest oder einen Phenylrest darstellt, ausgenommen R = n-Butyl.

2. Biozides Mittel, dadurch gekennzeichnet, daß es neben flüssigen oder festen Trägerstoffen als aktiven Wirkstoff Triorganozinnverbindungen der allgemeinen Formel

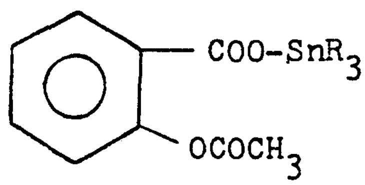

worin R einen Alkylrest mit 3 - 8 C-Atomen, insbesondere 4 C-Atomen, einen Cyclohexylrest oder einen Phenylrest darstellt, enthält,

3. Biozides Mittel gemäß Anspruch 2, dadurch gekennzeichnet, daß es als aktive Komponente Tri-n-butylzinnacetylsalicylat enthält.

4. Verwendung von Mitteln gemäß den Ansprüchen 2 und 3 zur Bekämpfung von Bakterien, Pilzen, Algen und Unterwasserbewuchs-Organismen.

5. Verwendung von Mitteln gemäß den Ansprüchen 2 und 3 im Holzschutz zur Bekämpfung von holzschädigenden Pilzen.

Mit der obengenannten Formulierung ist bei einer täglich einmaligen Dosierung von 20 ppm (≙ 3 ppm Wirkstoff) die Keimzahl einer Betriebskühlwasserflotte unter der üblichen Grenze von 50.000/ml zu halten.

**Patentansprüche**

für den Vertragsstaat AT

1. Verfahren zur Herstellung von bioziden Mitteln, dadurch gekennzeichnet, daß man Triorganozinnverbindungen der allgemeinen Formel

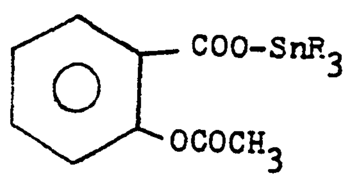

worin R einen Alkylrest mit 3 - 8 C-Atomen, insbesondere 4 C-Atomen, einen Cyclohexylrest oder einen Phenylrest darstellt, als aktive Wirkstoffe in üblicher Weise, gegebenenfalls mit anderen Wirkstoffen, mischt oder Zubereitungen mit flüssigen oder festen Trägerstoffen und gegebenenfalls mit üblichen Zusätzen herstellt.

2. Verfahren zur Herstellung von bioziden Mitteln, dadurch gekennzeichnet, daß man Tri-n-butylzinnacetylsalicylat in üblicher Weise mit anderen Trirorganozinnacetylsalicylaten und/oder anderen Wirkstoffen mischt oder Zubereitungen mit flüssigen oder festen Trägerstoffen und gegebenenfalls mit üblichen Zusätzen herstellt.

3. Verfahren zur Herstellung von bioziden Mitteln zur Bekämpfung von Bakterien, Pilzen, Algen und Unterwasserbesuchs-Organismen, dadurch gekennzeichnet, daß man als biozide Mittel Triorganozinnverbindungen der allgemeinen Formel

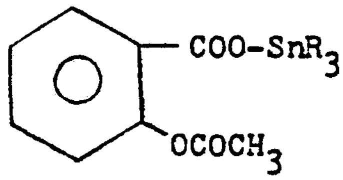

worin R einen Alkylrest mit 3 - 8 C-Atomen, einen Cyclohexylrest oder einen Phenylrest darstellt, insbesondere n-Butyl, einsetzt.

4. Verfahren zur Herstellung von bioziden Mitteln zur Bekämpfung von holzschädigenden Pilzen, dadurch gekennzeichnet, daß man als biozide Mittel Triorganozinnverbindungen der allgemeinen Formel

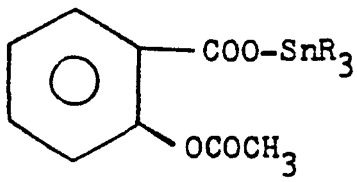

worin R einen Alkylrest mit 3 - 8 C-Atomen, einen Cyclohexylrest oder einen Phenylrest darstellt, insbesondere n-Butyl, einsetzt.

**Claims**

for contracting states BE, CH, DE, FR, IT, LU, NL GB and SE.

1. Triorgano tin compounds of general formula

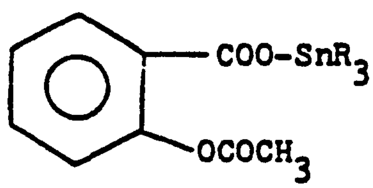

wherein R is an alkyl group of 3-8 carbon atoms, a cycloalkyl group or a phenyl group, with the exception of R = n-butyl.

2. A biocidal composition characterised in that in addition to liquid or solid carriers, it comprises as active material, a triorgano tin compound of general formula

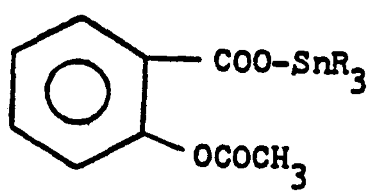

wherein R is an alkyl group of 3-8 carbon atoms, especially 4 C-atoms, a cycloalkyl group or a phenyl group.

3. A biocidal composition according to claim 2, characterised in that it comprises tri-n-butyl tin acetylsalicylate, as the active component.

4. Use of compositions according to claims 2 and 3, for combating bacteria, fungi, algae and organisms growing in water.

5. Use of compositions according to claims 2 and 3, for combating wood damaging fungi in order to protect wood.

**Claims**

for contracting state AT.

1. Process for the preparation of biocidal compositions, characterised in that triorganotin compounds of general formula

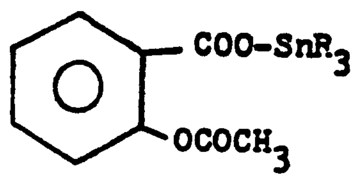

wherein R is an alkyl group of 3-8 carbon atoms, especially 4 C-atoms, a cycloalkyl group or a phenyl group, are mixed as active materials, in conventional manner, optionally with other active materials, or preparations are formed with liquid or solid carriers and optionally with conventional additives

2. Process for the preparation of biocidal compositions, characterised in that tri-n-butyltin acetylsalicylate is mixed in conventional manner with other triorganotin acetylsalicylates and/or other active materials or preparations are formed with liquid or solid carriers and optionally with conventional additives.

3. Process for the preparation of biocidal compositions for combating bacteria, fungi, algae and organisms growing in water, characterised in that there are used as the biocidal material, triorganotin compounds of general formula

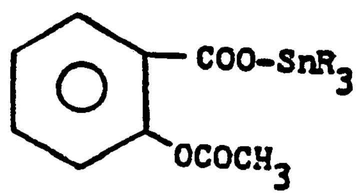

wherein R is an alkyl group of 3-8 carbon atoms, a cycloalkyl group or a phenyl group, and especially n-butyl.

4. Process for the preparation of biocidal compositions for combating wood damaging fungi, characterised in that there are used as the biocidal material, triorganotin compounds of general formula

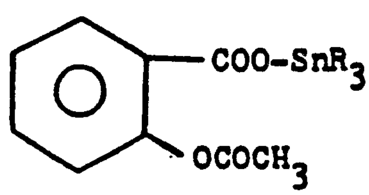

wherein R is an alkyl group of 3-8 carbon atoms, a cycloalkyl group or a phenyl group, and especially

**Revendications**

pour les Etats contractants: BE CH DE, FR,IT, LU, NL, GB, SE.

1. Composés de triorganoétain de formule générale

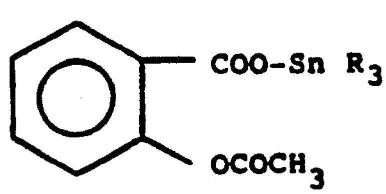

dans laquelle R représente un groupe alkyle en C 3 - C 8, un groupe cyclohexyle ou un groupe phényle à l'exclusion de R = n-butyle.

2. Agent biocide, caractérisé en ce que, outre des matières véhicules liquides ou solides, il contient comme matières actives des composés de triorganoétain de formule générale:

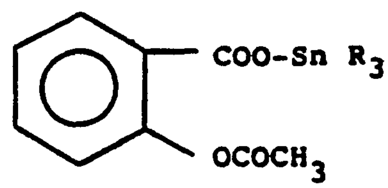

dans laquelle R représente un groupe alkyle en C 3 - C 8, en particulier en C 4, un groupe cyclohexyle ou un groupe phényle.

3. Agent biocide selon la revendication 2, caractérisé en ce qu'il contient comme composant actif de l'acétylsalicylate de tri-n-butylétain.

4. Utilisation des agents selon les revendications 2 et 3 pour lutter contre les bactéries, les champignons, les algues et les organismes à croissance sous-marine.

5. Utilisation des agents selon les revendications 2 et 3, dans le domaine de la protection des bois, pour lutter contre les champignons attaquant le bois.

**Revendications**

pour l'Etat contractant: AT

1. Procedé de préparation d'agents biocides caracterise en ce que l'on mélange des composés de triorganoétain de formule générale

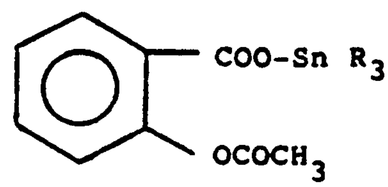

dans laquelle R représente un radical alkyle en C 3 - C 8, en particulier en C 4, un groupe cyclohexyle ou un groupe phényle en tant que substances actives, de manière classique, éventuellement avec d'autres substances actives, ou en ce que l'on élabore des préparations avec des supports liquides ou solides et éventuellement avec les additifs classiques.

2. Procédé de préparation d'agents biocides caractérisé en ce que l'on mélange de l'acetylsalicylate de tri-n-butyletain de manière classique avec d'autres acétylsalicylates de triorganoétain et/ou d'autres substances actives ou en ce que l'on élabore des préparations avec des supports liquides ou solides et éventuellement avec des additifs classiques.

3. Procédé de préparation d'agents biocides pour lutter contre les bactéries, les champignons, les algues et les organismes à croissance sous-marine, caractérise en ce que l'on incorpore comme agent biocide des composés de triorganoétain de formule générale:

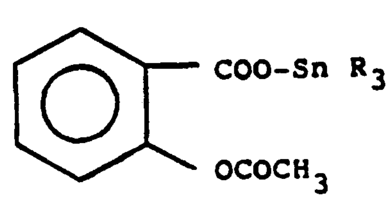

dans laquelle R représente un groupe alkyle en C 3 - C 8, un groupe cyclohexyle ou un groupe phényle, en particulier le groupe n-butyle.

4. Procédé de préparation d'agents biocides pour lutter contre les champignons s'attaquant au bois,

caractérise en ce que l'on incorpore comme agent biocide des composés de triorganoétain de formule générale:

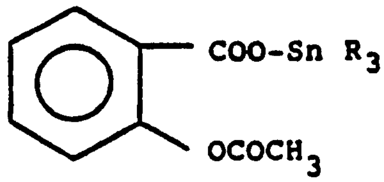

dans laquelle R représente un groupe alkyle en C 3 - C 8, un groupe cyclohexyle ou un groupe phényle, en particulier le groupe n-butyle.